# EUROPEAN PATENT SPECIFICATION

(11) **EP 4 598 335 B1**
(45) Date of publication and mention of the grant of the patent: **02.12.2026**
(21) Application number: 23798837.3
(22) Date of filing: 02.10.2023
(51) Int. Cl.: A01D 41/02, A01D 41/12, A01D 41/127, A01F 12/56, A01F 12/58, B60L 50/15

(54) **HYBRID SELF-PROPELLED COMBINE HARVESTER**
HYBRID-MÄHDRESCHER MIT EIGENANTRIEB
MOISSONNEUSE-BATTEUSE HYBRIDE AUTOMOTRICE

(30) Priority: 05.10.2022 IT 202200020514
(43) Date of publication of application: 13.08.2025
(73) Proprietor: Bondioli & Pavesi S.p.A., 46029 Suzzara (MN) (IT)
(72) Inventor: BONDIOLI, Carlo, 46029 Suzzara (MN) (IT); BONDIOLI, Claudio, 46034 Borgo a Virgilio (MN) (IT)
(74) Representative: Mannucci, Michele
(86) International application number: PCT/IB2023/059848
(87) International publication number: WO 2024/074972

(56) References cited:
- EP-A1- 2 778 003
- EP-A1- 3 257 353
- EP-A2- 2 130 735
- US-A1- 2021 079 837
- US-A1- 2022 304 240

## Description

### TECHNICAL FIELD

The present invention concerns improvements to agricultural machinery, and in particular to self-propelled combine harvesters.

### BACKGROUND ART

The self-propelled combine harvester is a machine that incorporates internally various functional units that perform different functions and comprise respective working members. Although these functions and the related members are not synchronized with one another, they are nonetheless linked and correlated by the flow of material that is first harvested and then processed. In the self-propelled combine harvester the following base functions can be listed: forward movement on the ground; harvesting, i.e., cutting and collecting the material from the field; threshing, i.e., separating the grain from the rest of the plant; collection and unloading of the grain.

The architecture of modern self-propelled combine harvesters includes a high power internal combustion engine that operates at a fixed rotation speed, generally close to the maximum power, and drives a mechanical coupler, which distributes the power to pumps, pulleys and drive shafts, which in turn drive the various members of the machine. For reasons of optimizing material flows and balancing weights, the internal combustion engine is generally located at the rear of the machine. This leads to the need to transfer power from the rear part of the combine harvester to the front part with relatively long and articulated kinematic chains.

Travel, i.e., forward movement on the ground, is obtained by means of hydrostatic transmissions, with variable displacement pumps and motors that allow the forward movement speed of the combine harvester to be varied separately from the rotation speed of the internal combustion engine. These components also have the advantage of having a limited weight compared to the power transmitted and allow the power to be taken from the coupler to the wheel axles in a relatively simple manner via hydraulic pipes.

Harvesting takes place through heads mounted on the front part of the machine. The heads are of different shape, weight and type, as a function of the type of material to be harvested (wheat, corn, sunflower seeds, etc.) and also have power absorptions that differ greatly from one another. This can range from simple pick-ups that absorb a few tens of kilowatts, 20-30 kW, to multi-row corn heads that can reach 150-180 kW.

In general, the heads have a cutting member, which at times must have a specific speed defined as a function of the conditions of the material, and have conveyor systems to carry the material towards the feed channel of the combine harvester, the speeds of which instead depend on the amount of material harvested.

In the majority of combine harvesters, the power is transmitted to the heads by means of various belt transmissions that start from the coupler and end at the head. These belt transmissions can be engaged and disengaged with belt tensioners or with hydraulic and/or electromagnetic clutches.

The latest machines have shaft transmissions, which are more reliable than belt transmissions and consequently allow more power to be transmitted and require less maintenance.

After being cut, the material is conveyed via a feed channel toward the threshing system. In general, to simplify transmission, the feed channel has a fixed transmission ratio with respect to the mechanical part that drives the harvest head. However, some manufacturers are attempting to make it possible to vary the speed of the feed channel separately from the harvest head to optimize the flow of material and reduce inefficiencies.

The threshing system is formed by one or more rotating drums that, through centrifugal force, push the material against appropriately shaped screens. The plant rubs against the external screen, causing the grain to separate from the rest of the plant which occurs through husking. In this step it is important for the grain to remain integral in order to have a product of high quality and at the same time it is important to minimize losses, i.e., to ensure that all the grains are harvested and avoid leaving them on the field. To obtain this it is necessary to be able to appropriately vary the speed of the drum, speed which will depend on the type of material harvested, on the amount of material processed and on its conditions at the time of harvesting (degree of ripeness, humidity, etc.).

There are threshing drums that require, for example, the possibility of varying the speed from 200 up to 1200 rpm, which are values that cannot be reached with a simple belt variator. To make up for this limit, some manufacturers use 2 or 3 speed gearboxes in combination with the variators, so as to be able to cover the whole speed range required.

The combine harvester also comprises cleaning members that allow the grain to fall to the bottom of the combine harvester while they convey the rest of the plant toward the rear part of the machine to then scatter it on the ground. After reaching the bottom of the combine harvester, the grain is stored in a hopper. The rear of the combine harvester is provided with members for chopping the plant residues and for scattering them uniformly on the ground, if they do not need to be harvested. All the cleaning members are driven by mechanical transmissions, almost always belt driven, which generally have a fixed transmission ratio with respect to the internal combustion engine. The chopping members are in turn driven via belt transmissions. The members that scatter the material are instead mechanically or hydraulically driven. In more complex machines, the hydraulic solution is used as it allows variation of the speed of the members and more uniform distribution of the material on the ground, in order to facilitate subsequent tilling operations.

The grain is generally unloaded when the hopper is full, and unloading can take place at the side of the field while the combine harvester is not harvesting, or directly on the field while the combine harvester is harvesting.

The common aim of all combine harvesters is to try to obtain a product of high quality optimizing the performance of the machine. Considering the complexity of the combine harvester, the different functions and the members that are involved, it is possible to encounter situations that differ completely from one another, which depend on the type of material, its conditions and the conditions of the field.

It is evident that, if the combine harvester is not correctly managed, it can be subject to frequent clogging or slowdowns. At times clogging, especially of the threshing drum, causes the internal combustion engine to shut down.

It is therefore important to vary the speed of the four main members, i.e.: forward movement, harvest head, feed channel from the harvest head to the threshing drum, and threshing drum. The purpose is to obtain a constant flow of material as this allows an increase in the quality of the product, maximization of the amount of material processed and a reduction in consumptions.

Notwithstanding the continuous increase in increasingly sophisticated control systems, the combine harvester is subject to frequent torque and power peaks, which are difficult to predict and very fast.

There have recently been proposed hybrid combine harvesters, in which the internal combustion engine is combined with a reversible electric machine, adapted to operate as motor and as generator, alternatively. A control system manages the electric machine so as to: convert an excess of mechanical power generated by the internal combustion engine into electrical power, which is stored in a storage battery, and exploit power from the storage battery to make up for the need for extra power with respect to the power delivered by the internal combustion engine. A combine harvester of this type is described in EP2778003. In this combine harvester, the internal combustion engine is associated with a geartrain, which connects a reversible electric machine to the internal combustion engine and moreover which transmits motion to a control shaft that drives the wheels of the combine harvester and/or functional units thereof. The electric machine works alternatively: as electric motor, supplied by a storage battery, to supply electrical power to the control shaft, which is added to the power generated by the internal combustion engine, or as generator, rotated by the internal combustion engine, to convert mechanical power generated by the internal combustion engine into electrical power which is stored in the storage battery.

A further combine harvester, having the same structure as the combine harvester described in EP2778003, is described in EP3257353. Also in this case, a reversible electric machine is connected to the output shaft of the internal combustion engine and works alternatively as motor or generator. The electric machine is controlled so as to maintain the operating speed of the internal combustion engine constant.

These hybrid combine harvesters are not entirely satisfactory in managing variation of the loads of the various functional units of the combine harvester during operation. In particular, they do not allow optimization of the operation of different functional units of the same combine harvester.

US2022/0304240 describes a hybrid combine harvester that comprises an internal combustion engine and an electric machine consisting of a motor-generator. A gearblock comprises a first input connected to the internal combustion engine and a second input connected to the motor-generator. The gearblock further comprises an output connected to a threshing drum. Appropriate clutches allow detachment of the internal combustion engine from the gearbox and separation of the output of the gearbox from the threshing drum. The single electric machine operates selectively as motor or as generator as a function of the load applied to the threshing drum. If the power supplied by the internal combustion engine is sufficient, the threshing drum is rotated only by the internal combustion engine. If the power of the internal combustion engine is not sufficient, the electric machine operates in motor mode and supplies additional power, using energy stored in a battery storage system. If the power supplied by the internal combustion engine is greater than the power delivered to the threshing drum, part of the mechanical power generated by the internal combustion engine is transferred to the electric machine. In this case, it operates in motor mode and charges the storage battery.

This prior art combine harvester does not allow optimization of the internal combustion engine from the viewpoint of consumptions and sizing.

Therefore, it would be advantageous to produce a hybrid combine harvester that is able to obtain improved management of the power flows inside the combine harvester in order to obtain various advantages, including, for example, a reduction of consumptions and an increased useful life of the combine harvester and/or of its components.

### SUMMARY

The work of the combine harvester is characterized by a very high demand for continuous power (from 200 kW for the smallest machines up to 450-500 kW for the largest machines). The work is then condensed into a few weeks over the course of the year and in these weeks work is practically continuous, with few breaks during the day. Moreover, the machine does not usually return to base at the end of the day. For these reasons, the combine harvester is not suited to have a totally electric transmission, as this would require very large batteries that would be difficult, if not impossible, to charge on the field. Furthermore, the weight of a purely electric power transmission would be much higher than the current weight of a transmission supplied by internal combustion engine, resulting in an increase in the power level required for travel and considerable disadvantages when working on soft ground.

According to the present disclosure, a hybrid transmission is provided which is adapted of combining the power density of an internal combustion engine with the flexibility of an electric transmission. The architecture provides for an internal combustion engine, which transmits the power to a coupler, which in turn distributes the power between the various members or functional units of the combine harvester. Based on a cost-benefit analysis, transmission to the various functional units is purely electric for some functional units (for example for forward movement or travel), purely mechanical (with pulley transmission or similar), or combined electric and mechanical, through respective combined transmissions, for example continuously variable electro-mechanical transmissions that combine the mechanical power of the internal combustion engine with the electrical power coming from a storage battery, through the use of one or more electric machines associated with the continuously variable transmission. This combined transmission is used in particular, for example, to drive the threshing drum and/or the harvest head and/or the feed channel between harvest head and threshing drum.

In general, the electric machines provided in the combine harvester disclosed herein can operate both as generators, and as motors, as a function of the operating conditions. For example, an electric motor for travel, can operate as generator and used to generate power, when traveling downhill or braking. In some functional units two separate electric machines can be provided, i.e., an electric machine comprising two electric units, one operating exclusively or mainly as motor and the other exclusively or mainly as generator.

Additionally, it is possible to provide the combine harvester with a system for storing the electrical energy comprising, for example, batteries, or capacitors or fast charging and discharging supercapacitors. The storage system for storing energy generated by the internal combustion engine and converted into electrical energy, has the main function of managing the torque peaks or sudden variations of power of one or other of the functional units, with which a transmission comprising at least one electric machine is associated, allowing operation of the functional unit to be controlled and also optimizing operation of the internal combustion engine with a consequent decrease in consumptions.

According to embodiments disclosed herein, there is provided a self-propelled combine harvester comprising the features of claim 1. Further features and embodiments are described hereunder and defined in the dependent claims.

In particular, according to the present disclosure, the combine harvester comprises an internal combustion engine and at least a first electric machine, intended to operate mainly as electric generator, mechanically connected, directly or indirectly, to the internal combustion engine and adapted to convert mechanical power generated by the internal combustion engine into electrical power. Moreover, the combine harvester comprises a storage system for storing energy generated by the first electric machine and a first mechanical transmission that connects the internal combustion engine to a first functional unit. The first mechanical transmission is combined with a second electric machine configured to operate at least in motor mode and electrically connected to the storage system to receive electrical energy from the storage system. The combine harvester further comprises a control unit configured to control the second electric machine as a function of the speed of the first functional unit or of the power absorbed by the first functional unit, or the load applied to the first functional unit. In general, control of the second electric machine is performed as a function of at least one operating parameter of the functional unit. The first mechanical transmission comprises a first continuously variable transmission, in turn comprising: a first input mechanically connected to the internal combustion engine, a second input mechanically connected to the second electric machine, and an output connected to the first functional unit.

In general, the control unit can be interfaced with a speed transducer that can measure the speed of two of the three shafts of the continuously variable transmission, for example an input shaft connected to the second electric machine and an output shaft that connects the continuously variable transmission to the functional unit. The features of the continuously variable transmission being known, it is possible to obtain the speed of the third shaft from the two detected speed values.

In some embodiments, the control unit can be interfaced with at least the second electric machine to detect the supply current and voltage. From these two data, it is possible to obtain the power delivered by the second electric machine to the first functional unit.

The first functional unit works, in general, absorbing power from the internal combustion engine and, if necessary, from the second electric machine. Based on the speed and/or current and voltage values mentioned above, the control unit is able to control operation of the first functional unit by ensuring that a part of the mechanical power to the first functional unit is delivered by one or more electric machines, combined with part of the mechanical power delivered by the internal combustion engine. The combination of the two powers is obtained via the continuously variable transmission. In this way, as will be more apparent from the exemplary embodiments described below, it is possible to reduce the peaks of power delivered to the functional unit by the internal combustion engine and maintain the internal combustion engine around an optimal operating point, at maximum efficiency, resulting in reduced consumptions.

In practice, due to the continuously variable transmission and to the presence of at least two electric machines, in combination with the internal combustion engine, the functional unit can be maintained in rotation at the desired speed, absorbing more or less power as a function of the load on the functional unit, using the internal combustion engine to supply a base power (base load) and the electric machines in combination with the storage system, to absorb excess power produced by the internal combustion engine, or deliver power to integrate the power delivered by the internal combustion engine, so as to optimize operation of the functional unit and minimize consumptions.

Preferably, the second electric machine is adapted to operate in motor mode and in generator mode and can comprise a single electric unit or more than one electric unit, where electric unit means an assembly comprising a stator and a rotor.

Therefore, in general in the present context "electric machine" means a single electric unit, comprising a rotor and a stator, or a plurality of electric units, each comprising a rotor and a stator. In the second case, in possible embodiments, two or more electric units can be configured to operate alternatively as motor or as generator. In other embodiments, one or more electric units can be adapted to operate exclusively or mainly as generators and one or more electric units can be adapted to operate exclusively or mainly as motors. Therefore, the term "electric machine" is not limited to a single group comprising a rotor and a stator.

The first functional unit can comprise a threshing drum or rotor, a harvest head, a feed channel between the harvest head and the threshing drum, or a combination thereof.

One, two or more functional units can be mechanically connected to the internal combustion engine via a coupler, which can comprise a geartrain with an input shaft, drivingly coupled to the shaft of the internal combustion engine, and a plurality of output shafts, one of which can be connected to the first electric machine and one or more other output shafts are configured to transmit mechanical power from the shaft of the internal combustion engine to one or more functional units.

In other embodiments, the first electric machine might not be directly connected to the coupler, but to a mechanical transmission between the internal combustion engine and the functional unit, for example to a shaft of the continuously variable transmission that connects the internal combustion engine, or the coupler, to the functional unit. In other embodiments, the first electric machine can comprise both a first electric unit directly connected to an output of the coupler, and a second electric unit connected to the internal combustion engine through a mechanical continuously variable transmission, positioned between the internal combustion engine and a functional unit.

In some embodiments, the continuously variable transmission can comprise a third input connected to an electric unit belonging to the first electric machine. The third input can consist of a shaft that is coupled both to the electric unit, and to the internal combustion engine, as will be described in detail below. In this case, the continuously variable transmission is in practice connected to two electric units, which can each consist of a rotor/stator pair, both capable of operating as motor and as electric generator, or one intended to operate exclusively or mainly as electric generator and the other exclusively or mainly as electric motor. This configuration can be combined with a coupler having output connected to a further electric machine intended to operate mainly as generator, which in this case constitutes (part of) the first electric machine. Alternatively, the first electric machine and the second electric machine consist of the electric units directly connected to input shafts of the continuously variable transmission.

In general, as the energy system of the combine harvester comprises at least two electric machines, one operating (also, or exclusively) as electric generator and the other operating (also, or exclusively) as electric motor, the storage system can be of substantially limited size, as a proportion of the available mechanical power is almost continuously converted into electrical power that charges the storage system.

In this way, it is possible, for example, to use storage systems equipped with supercapacitors, which have a limited storage capacity, but a very fast response time. Therefore, they can switch from a charging mode to a discharging mode in a very short time and can deliver very high electrical powers, even if for a short time. This is particularly useful to reduce the absorption peaks of mechanical power from the internal combustion engine with the further advantages described below.

Using a continuously variable transmission with a first input mechanically connected to the internal combustion engine and a second input connected to an electric machine adapted to operate as motor, it is possible to vary the speed of the output shaft of the continuously variable transmission separately from the speed of the internal combustion engine. The latter can be maintained around an optimal value of the rotation speed for the purposes of maximizing efficiency, while the rotation speed of the functional unit can be varied according to need, or can vary temporarily as a result of an oscillation of the applied load, without this influencing the operation of the internal combustion engine, or with a much lower effect on the rotation speed of the internal combustion engine than that which occurs in systems of the current art.

In particularly advantageous embodiments, the first functional unit comprises the threshing drum and can be connected via a coupling and decoupling device (for example a hydraulic and/or electromagnetic clutch) to the internal combustion engine. The transmission between the internal combustion engine and the threshing drum can be advantageously coupled to two electric units, each of which can operate both as motor and as generator, or one mainly as motor and the other mainly as generator, which together form an electric machine in the sense defined above. Moreover, there are provided one or more inverters, which simultaneously manage the two electric units and the energy storage system.

With the architecture described herein saving on the sizing of the internal combustion engine used can be achieved. The power required for the operating peaks is in fact managed by the electric subsystem that uses the energy stored (in the form of electrical, chemical or other energy) in the storage system. The energy stored is always produced by the internal combustion engine, but at times in which the maximum power of the internal combustion engine is not required. A decrease in fuel consumption is also obtained, as the internal combustion engine operates at more constant rotation speeds and is not obliged to suddenly vary its operating point. These sudden variations are, in fact, managed by the electric subsystem. More precisely, a control unit can manage the electric machines as a function of the speed of the threshing drum, or of other functional units, ensuring that the speed of the threshing drum is maintained around a desired value, varying the electrical power flow from and/or toward the electric machine or electric machines (motor and generator) associated with the mechanical transmission that connects the functional unit to the internal combustion engine.

With specific reference to the threshing drum, if the speed thereof tends to decrease compared with a desired rotation speed, the control unit ensures that one of the electric units connected to the mechanical transmission that connects the internal combustion engine to the threshing drum is supplied with more electrical power from the storage system, thereby returning the rotation speed of the threshing drum to around the required speed. Vice versa, if the speed of the threshing drum tends to increase beyond the required value, the control unit ensures that the other of the electric machines associated with the mechanical transmission operates in generator mode, converting mechanical power into electrical power which is then accumulated in the storage system as electrical energy (e.g. in the case of capacitors or supercapacitors) or in another form of energy, for example in the form of chemical energy (storage batteries).

The control can also be implemented as a function of the powers at play and hence of the load on the threshing drum. For this purpose, it may be useful for the control unit of the combine harvester to receive input data sufficient to determine the power absorbed by the threshing drum and to vary the power delivered to the threshing drum by the second electric machine and by the internal combustion engine. These data can concern the rotation speed of the output shaft of the continuously variable transmission (and hence the rotation speed of the threshing drum), the rotation speed of the input shaft of the continuously variable transmission connected to the second electric machine and the power delivered by the second electric machine, which can be determined based on the current and voltage of the second electric machine. The speed of an input shaft and of the output shaft of the continuously variable transmission being known, it is possible to obtain, based on considerations of equilibrium of the forces, the rotation speed of the second input shaft and hence the power delivered to the threshing drum by the internal combustion engine.

In this configuration, the control unit can act on the operation of the generators of mechanical power (internal combustion engine and second electric machine), so as to cover the load absorbed by the threshing drum (i.e., so as to supply the total power required for operation of the threshing drum at the required speed, appropriately varying the power delivered by the power generating machines. As it is generally advantageous for the internal combustion engine to operate at a constant speed, in general it is advantageous for a variation of the mechanical power delivered by the second electric machine to correspond to fluctuation of the power absorbed by the threshing drum. If the load on the threshing drum increases (with the tendency to decrease its rotation speed), the power delivered by the second electric machine increases accordingly. The power delivered by the second electric machine is generated by absorbing energy stored in the storage system. Vice versa, if the power absorbed by the threshing drum decreases (with the tendency to increase its rotation speed), the power delivered by the second electric machine decreases.

The first electric machine can be maintained in rotation by the internal combustion engine to guarantee charging of the storage system.

The description above with reference to the threshing drum and to the control thereof, can (also) be implemented on a different functional unit, for instance on the harvest head or on a feed channel between the harvest head and the threshing drum, or on combinations thereof.

Although in advantageous embodiments two electric units, the one mainly operating as electric generator and the other mainly as electric motor, are associated with the mechanical transmission between the internal combustion engine and the threshing drum, it would also be possible to use a single reversible electric machine, i.e., consisting of a single electric unit comprising stator and rotor, which operates alternatively in motor mode and in generator mode. Alternatively, the electric machine connected to the transmission between internal combustion engine and threshing drum can comprise a single unit and operate mainly or exclusively as electric motor. The function of generator can in this case be taken by an electric machine connected to the internal combustion engine in a different point, instead of on the transmission between internal combustion engine and threshing drum. For example, the function of electric generator can be performed by an electric machine connected to a shaft of the coupler, different from the shaft to which the mechanical transmission is connected to the threshing drum.

With respect to the conventional solutions, for example of the type with hydraulic transmission, a combine harvester configured as disclosed herein allows a reduction in fuel consumption. In fact, the electric part has a much higher efficiency than an equivalent hydraulic system for managing the continuously variable transmission.

The architecture with generator, motor (or generator/motor) and storage system, combined with the internal combustion engine also allows a reduction in startup peaks, which are generally very onerous especially in the case of a clogged threshing drum. It is in fact possible to start the threshing drum in purely electric mode before engaging the mechanical transmission.

It is also possible to implement the reverse function of the threshing drum to free it of any clogging, without particular mechanisms for blocking the internal gears of the mechanical transmission. This is not normally possible in combine harvesters in which the mechanical transmission comprises a hydraulic rather than an electric part. In the system proposed herein, the generator can act as a brake and/or in turn cause the part generally connected to the mechanical transmission to rotate in the opposite direction.

According to some embodiments, the hybrid drive via internal combustion engine and electric motor that uses a continuously variable mechanical transmission which combines the two power sources (internal combustion engine and electrical energy storage system) can be provided for the harvest head, instead of for the threshing drum, or both for the harvest head, and for the threshing drum, via two separate continuously variable transmissions, each one equipped with two respective input shafts, for the power generated by the internal combustion engine and for the power generated (or absorbed) by a respective second electric machine. With the application of the continuously variable transmission to the harvest head advantages similar to those described above with reference to hybridization of the threshing drum are obtained. The structural and functional features described above can be entirely or partly used in combination with the harvest head.

Moreover, in some cases it is possible to optimize the speed of the cutting and harvesting members of the harvest head as a function of the forward movement speed of the combine harvester.

The control can be performed in a manner similar to the one illustrated in relation to the threshing drum: the electrical power flow from and toward the electric machine or electric machines combined with the mechanical transmission can be controlled by the control unit as a function of the speed of the harvest head, and with the object of maintaining said speed within a suitable range around a desired speed, which can be modified during operation, if required.

Also in this case two electric units can be provided, which operate one mainly as motor and the other mainly as generator. In other embodiments, as described below with reference to the accompanying drawings, a single unit or reversible electric machine is provided, operating alternatively and selectively in motor mode and in generator mode.

In combination with, or alternatively to, one or other of the hybrid drive systems of the threshing drum and of the harvest head, according to embodiments described herein, a hybrid system is provided to drive the feed channel between harvest head and threshing drum.

Similarly to the drive of the threshing drum and/or of the harvest head, when the feed channel is driven with a hybrid system, a mechanical transmission can be provided, which receives motion from the internal combustion engine and combines the mechanical power generated by the internal combustion engine with mechanical power generated by a reversible electric machine powered by the storage system. The latter can absorb excess power if the feed channel requires less power than that delivered by the internal combustion engine, and charge the storage system. Alternatively, the electric machine, connected via the continuously variable transmission to the feed channel can operate mainly or exclusively as electric motor, while any excess mechanical power is absorbed by the first electric machine that performs, exclusively or mainly, said generator function and which can be directly connected to the internal combustion engine through the coupler.

Preferably, the mechanical transmission of the feed channel is combined with a single electric machine that operates alternatively as motor or as generator, although (as for the threshing drum) the use of two separate electric units, which operate mainly as generator and mainly as motor, respectively, would also be possible.

Similarly to what was described above for the threshing drum and for the harvest head, the control unit can control the electrical power flow so as to maintain the speed of the feed channel around the desired value, delivering more electrical power if the speed of the feed channel tends to decrease, or converting mechanical power into electrical power with which to charge the storage system, if the feed channel tends to accelerate beyond the desired value.

The use of a hybrid transmission for the feed channel allows, for example, the following advantages to be obtained: simplification of the drive system both at the level of mechanical transmission and avoiding engagements and disengagements with clutches; and optimization of the feed speed as a function of the flow of material, thereby supplying only the necessary amount of energy, resulting in a reduction in consumptions.

In some embodiments, the combine harvester can have a fully electric system for forward movement on the ground, i.e. for travel. For this purpose, one or more electric motors can be provided, for example one for each driving wheel, supplied by electrical energy generated directly by the generator driven by the internal combustion engine and/or by energy delivered by the storage system.

The electric transmission allows a decrease in fuel consumption compared to the version with hydrostatic drive, as the electric transmission has a much higher efficiency than an equivalent hydraulic drive system. Moreover, it is possible to further reduce consumptions by appropriately using the electric motors in generator mode in case of braking, to accumulate energy in the storage system.

The cooling system of the internal combustion engine, generally composed of a radiator with several sections and of a fan, can also be improved using an electric motor to drive the cooling fan. In this way, it is possible to optimize the speed of the fan as a function of the operating temperature, allowing a reduction in consumptions.

Once the combine harvester is equipped with one or more electric machines operating in electric generator mode, it is possible also to drive the other members with low power absorption with small electric motors.

In general, the combine harvester comprises one or more inverters to transform the electrical power generated by the single generators or generators/motors and allow it to be stored in the storage system and to deliver electrical power from the storage system to the electric motors associated with the single functional units.

Advantageously, during work in the field the control unit of the combine harvester manages the different members and functional units of the combine harvester, including the travel member, and through the inverters manages the power flows between the various motors/generators and the storage system.

The control unit can act on each single member it is controlling, with the aim of maintaining the contribution of power mechanically transmitted by the internal combustion engine to the various member as constant as possible. This can be obtained by acting on the electric part to manage variations and peaks, and by suitably exploiting the storage system.

In case of important overloads of one of the functional units, which cannot be managed with the storage system alone, the control unit can act with a variation (reduction) of the power delivered to the other functional units so as to maintain the speed and the power transmitted by the internal combustion engine as constant as possible.

The values of voltage and current transmitted to the motors/generators being known, it is possible to obtain a precise instant reading of the operating conditions of the different members and functional units. This allows the control unit to manage and optimize the work, and also to act promptly in situations of overload, preventing them. In this way, the possibilities of clogging are reduced, as are the downtimes required to remove it. In some embodiments, the aim can be to operate the internal combustion engine at the conditions of maximum efficiency, avoiding using it at the maximum power, to maximize the performance and reduce consumption thereof. This strategy allows the use of motors with a lower maximum power than those currently used, resulting in a reduction in costs and weights.

By using the internal combustion engine at maximum efficiency, maintenance costs are reduced.

According to a further aspect, there is provided a method for managing a combine harvester comprising: an internal combustion engine; at least a first electric machine, mechanically connected to the internal combustion engine and adapted mainly to convert mechanical power generated by the internal combustion engine into electrical power; an energy storage system for storing energy generated by the first electric machine; a first mechanical transmission which connects the internal combustion engine to a first functional unit; wherein the first mechanical transmission is combined with a second electric machine configured to operate at least in motor mode and electrically connected to the storage system to receive electrical energy from the storage system; and wherein the first mechanical transmission comprises a continuously variable transmission comprising: a first input mechanically connected to the internal combustion engine, a second input mechanically connected to the second electric machine, and an output connected to the first functional unit; a control unit configured to control the second electric machine, and if necessary the first electric machine, as a function of the speed of the first functional unit or of the power absorbed by the first functional unit.

The method comprises the following steps: rotating the first electric machine with the internal combustion engine and producing electrical power; feeding the electrical power to the storage system; via the control unit, detecting a variation of an operating parameter of the functional unit; and in response to the variation of the operating parameter of the functional unit, varying the power delivered by the first and by the second electric machine to the functional unit through the first mechanical transmission, if necessary using the energy stored in the storage system.

The operating parameter of the functional unit can comprise the power absorbed by the functional unit or the speed of the functional unit, or both.

Advantageously, the functional unit can comprise a threshing drum. In some embodiments, the functional unit can comprise a harvest head or a feed channel between the harvest head and the threshing drum, or a combination thereof. In the case of combinations of more than one functional unit, each functional unit can comprise a continuously variable transmission and a dedicated electric machine. The control unit can control each electric machine of each functional unit with methods analogous to those described in relation to management of the threshing drum.

### BRIEF DESCRIPTION OF THE DRAWINGS

The invention will be better understood by following the description and the accompanying drawings, which illustrate a non-limiting example of embodiment of the invention. More in particular, in the drawing:
Fig.1 shows a schematic side view of a combine harvester;
Fig.2 shows a diagram of the functional units and of the related electric and mechanical transmissions, and of the system for storage and management of the power flows;
Fig.3 shows a diagram of the mechanical transmission and related electric part for driving the threshing drum;
Fig.4 shows a diagram of the mechanical transmissions and related electric parts for driving the feed channel and the harvest head;
Fig.5 shows a temporal diagram of the power absorbed by the threshing drum and delivered by the internal combustion engine and by the electric system; and
Fig.6 shows a histogram illustrating distribution of the power delivered by the internal combustion engine to the threshing drum.

### DETAILED DESCRIPTION

In the description below reference will be made to an embodiment provided with an electric or hybrid power supply of all the main functional units, i.e.: harvest head, feed channel, threshing drum, forward movement (travel), cooling of the internal combustion engine. However, it must be understood that in some embodiments a hybrid or electric drive system may be provided for only one or some of the functional units.

Preferably, at least the threshing drum and the harvest head are equipped with a transmission that combines mechanical power coming directly from the internal combustion engine with electrical power supplied by the storage system or transmitted towards the storage system. Advantageously, the transmission comprises a continuously variable transmission.

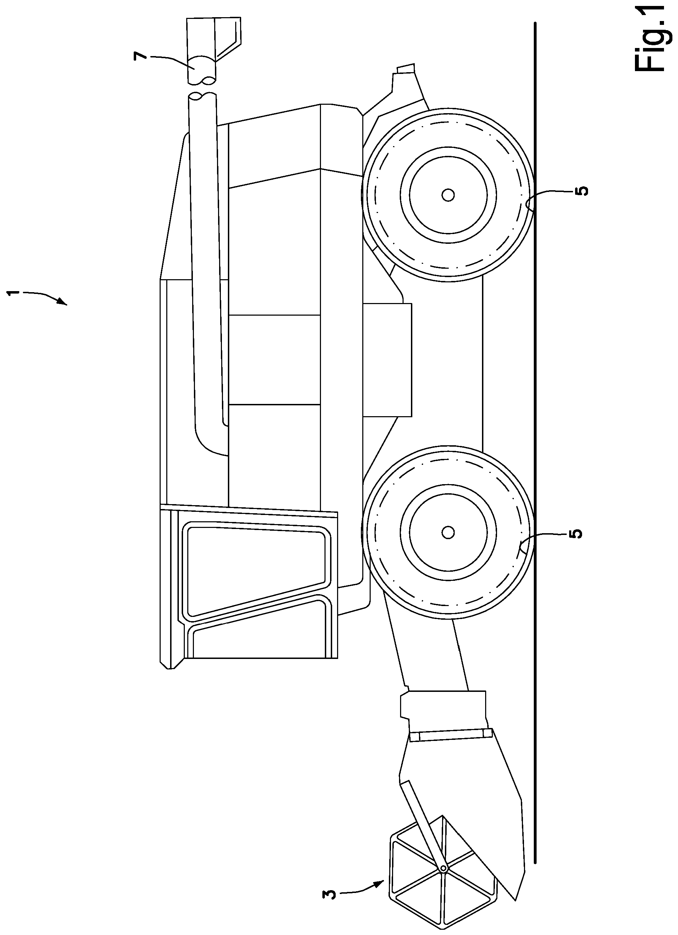

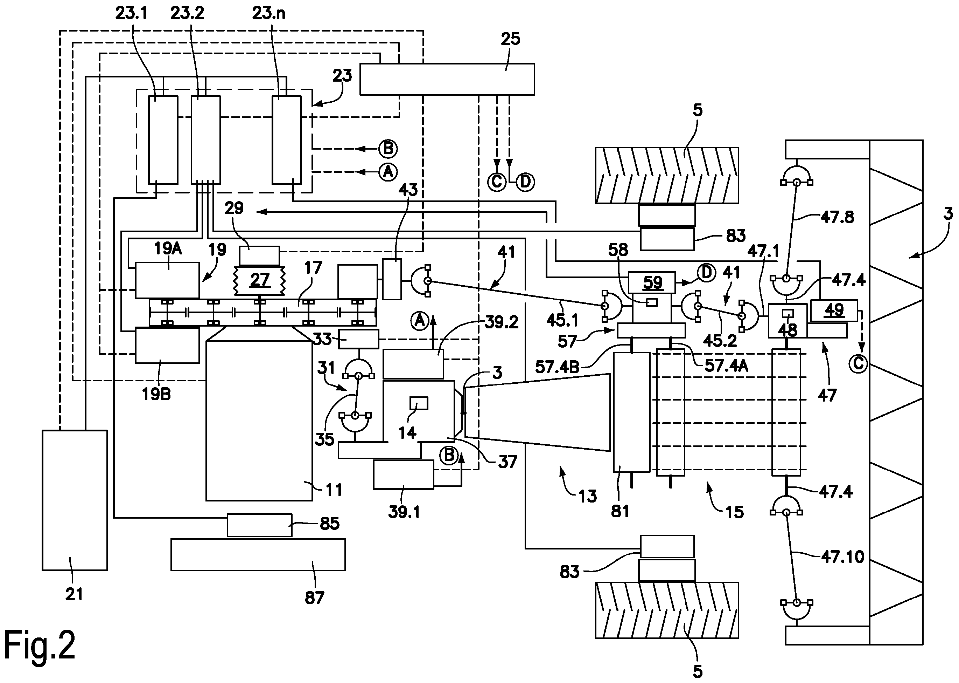

With reference now to the drawings, Fig.1 schematically shows a side view of a combine harvester 1 equipped with a harvest head 3 and with wheels 5, at least some of which are driving wheels. The reference number 7 indicates a grain unloading system. Internally, the combine harvester 1 is provided with various functional units, which are represented schematically in the diagram of Fig.2.

In Fig.2, the reference number 11 indicates an internal combustion engine, which is mechanically connected, in the manner described below, to a threshing drum 13, to the harvest head 3 and to a feed channel 15, which transfers the product cut and harvested by the harvest head 3 towards the threshing drum 13.

Reference number 17 indicates a mechanical transmission, hereinafter also indicated as "coupler", which connects an output shaft of the internal combustion engine 11 to a first electric machine 19, hereinafter indicated also as electric generator group 19, or briefly generator group 19, and to other components described below. In the illustrated embodiment, the generator group 19 comprises a first electric generator 19A and a second electric generator 19B. In other embodiments, not shown, the generator group 19 can comprise a single electric generator, or more than two electric generators. In yet other embodiments, the generator group 19 can be positioned differently, as described below.

The generator group 19 is electrically connected to a storage system 21, for example comprising batteries or other storage media, such as supercapacitors or similar. the use of supercapacitors as storage media is particularly advantageous in view of their fast discharge, i.e., of their ability to deliver high electric currents in short times.

The electrical connection between the generator group 19 and the storage system 21 comprises an arrangement of inverters 23. Schematically, in Fig.1 the arrangement of inverters 23 comprises a number n of inverters, indicated with 23.1, 23.2, ..... 23.n.

Advantageously, the inverters 23.1, .... 23.n, the storage system 21 and the generator group 19 are functionally connected to a control or monitoring unit 25.

The coupler 17 can be connected, via a clutch 29, to a pulley or series of pulleys 27, which transmit motion to one or more functional units, not shown. The clutch 29, for example an electromagnetic clutch, can be functionally connected to the control unit 25 that controls engagement and disengagement of the clutch 29 as a function of the operating requirements of the combine harvester.

The pulley 27 can, for example, transmit motion to one or more of the following members:
- cleaning members, such as sieves and blowing fans, that separate the grain from the rest of the plant;
- members for collecting the grain in the hopper.

Through subsequent branching, motion can also be transmitted, for example by means of a suitable engagement/disengagement system, to the discharge members, such as:
- straw chopping members;
- straw spreading members;
- grain unloading members.

The coupler 17 can in practice comprise a cascade gearbox, with an input, connected to the internal combustion engine 11, and several output shafts, one of which connected to the pulley or series of pulleys 27.

Via one of the output shafts of the coupler 17, the motion of the internal combustion engine 11 can be transmitted to a mechanical connection 31 that transmits power from the output of the internal combustion engine 11 to the threshing drum 13. The mechanical connection 31 can comprise a clutch 33, for example an electromagnetic clutch, which is functionally connected to the control unit 25 and can be engaged or disengaged to transmit, or not transmit, mechanical power generated by the internal combustion engine 11 through the coupler 17 to the threshing drum 13.

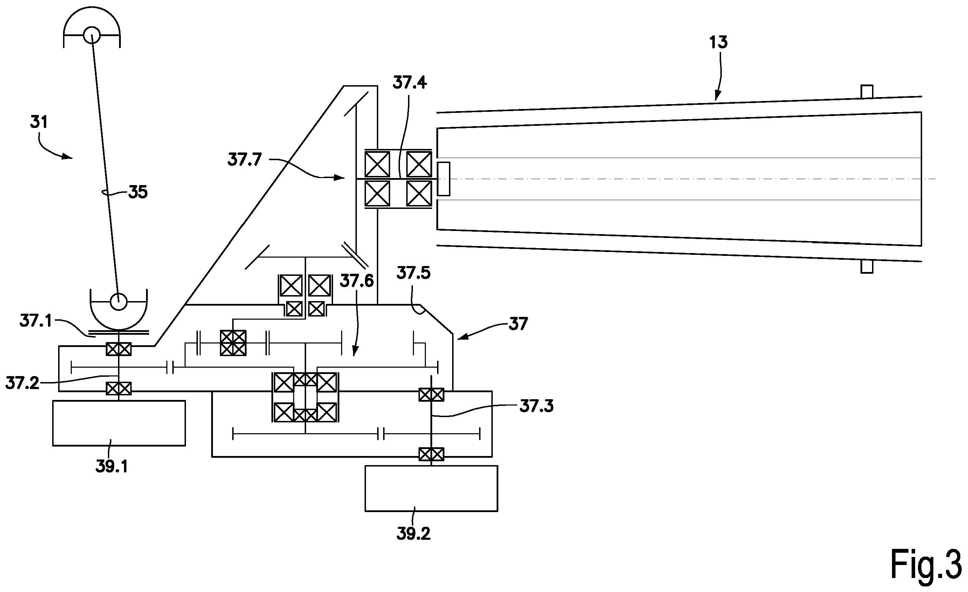

The mechanical connection 31 can comprise a shaft, for example a drive shaft, schematically indicated with 35, which transmits motion to a first input 37.1 of a mechanical transmission 37, in particular a continuously variable transmission. A diagram of a possible configuration of the continuously variable mechanical transmission 37 is illustrated in Fig. 3, described below.

The continuously variable mechanical transmission 37 is combined with a second electric machine 39. In the illustrated embodiment, the electric machine 39 comprises a first electric unit 39.1 and a second electric unit 39.2. Both the electric units 39.1 and 39.2 can be reversible electric machines, adapted to operate alternatively as motor and as generator and in general comprise a respective rotor and a respective stator. In other embodiments, the two electric units 39.1 and 39.2 can be controlled so as to operate the one exclusively in motor mode and the other exclusively in generator mode. The two electric units 39.1 and 39.2 are functionally connected to the control unit 25 (see Fig.2). In some embodiments, it is also possible to control the electric machine 39 so that it operates only in motor mode.

It would also be possible to use more than one electric unit 39.1 in parallel and more than one electric unit 39.2 in parallel.

In some embodiments, the generator 19 can be omitted and its function can be performed by an electric machine mechanically connected to the mechanical connection 31. For example, the electric unit 39.1 can constitute a generator, or operate mainly as generator, and perform the function of the first electric machine or electric generator 19. The electric unit 39.2 can constitute an electric machine serving the threshing drum 13 and mainly used in motor mode to supply mechanical power via the continuously variable transmission 37 to the threshing drum 13.

In the embodiment illustrated in Fig.3, the continuously variable mechanical transmission 37 comprises a first mechanical power input 37.1 (see Fig.3), to which the input shaft 35 is connected, and a second input which in practice comprises a first shaft 37.2, connected to the electric unit 39.1, and a second shaft 37.3, connected to the electric unit 39.2. The continuously variable mechanical transmission 37 further comprises an output 37.4 connected to the functional unit represented by the threshing drum 13.

By way of example, the continuously variable mechanical transmission 37 comprises a box 37.5, in which an epicyclic gearing 37.6 and an output bevel gear 37.7 are housed.

In practice, the continuously variable transmission 37 can receive power generated directly by the internal combustion engine 11 and transmitted from the internal combustion engine 11 to the continuously variable transmission 37 through the coupler 17 and the drive shaft 35. The mechanical power supplied through the input 37.1 can be combined by the epicyclic gearing 37.6 with mechanical power generated by the one and/or by the other of the two electric units 39.1 and 39.2, to operate (via the output 37.4) the threshing drum 13. In some embodiments, one of the two electric units 39.1, 39.2 can be omitted.

The rotation speed of the threshing drum 13 can, for example, be detected by a specific sensor. Reference number 14 schematically indicates a transducer that can detect, directly or indirectly, the speed of the threshing drum 13, for example detecting the speed of the output shaft 37.4. The transducer 14 is functionally connected to the control unit 25.

In some embodiments, the transducer 14 can be adapted also to detect the speed of at least one of the input shafts. By measuring two of the three speeds of the input/output shafts of the continuously variable transmission 37 it is possible to calculate the rotation speed of the third input or output shaft.

The power delivered (or absorbed) by the electric machine 39 being known, for example calculated based on the supply voltage and on the current absorbed (or generated) by the electric machine 39, the control unit 25 is capable of knowing the power flow from and/or towards each group connected to the continuously variable transmission 37, i.e.: the power absorbed by the threshing drum 13, the power delivered by the internal combustion engine 11 to the threshing drum and the power delivered by the electric machine 39 (or absorbed by the electric machine to feed it to the storage system).

The control unit 25 can thus vary the power flow to optimize the operation of the internal combustion engine 11 maintaining the threshing drum in the required operating conditions. In brief (further details regarding embodiments will be described below), the control unit 25 can ensure that the electric machine 39 makes up for the need for greater temporary power demand by the threshing drum by increasing the power delivered by the electric machine 39, which for this purpose absorbs energy stored in the storage system. The control unit 25 can advantageously also control the generator 19 (19A, 19B) as a function of the power generated by the internal combustion engine 11 and of the power absorbed by the functional units of the combine harvester, so that the excess mechanical power, generated by the internal combustion engine, is converted into electrical power by the generator 19 to charge the storage system 21.

In other embodiments, instead of using a speed sensor, the rotation speed of the threshing drum can be calculated as a function of the speed detected on the electric units 39.1 and 39.2, in such a way that the control unit 25 can vary the power flow through the electric units 39.1 and 39.2, which together constitute the electric machine 39, and maintain the rotation speed of the threshing drum 13 around a set speed. The desired speed of the threshing drum can be constant, or can be varied by the operator according to need and in particular, for example, as a function of the type of product processed and of the conditions thereof.

For example, when the speed required by the threshing drum 13 is greater than the mechanical transmission ratio of the epicyclic gearing of the mechanical transmission 37, the electric unit 39.1 can operate mainly as generator and convert mechanical power into electrical power, which feeds the electric unit 39.2 through the arrangement of inverters 23. In this case, the electric unit 39.2 operates mainly as electric motor. In this situation, when the rotation speed of the threshing drum 13 tends to increase beyond the set value (against a lower power required by the drum during operation) a part of the electrical energy generated by the electric unit 39.1, which in practice acts as a brake, feeds the storage system 21 through the arrangement of inverters 23, thereby reducing the power available to the electric unit 39.2 and to the threshing drum 13, which results in a reduction of the speed. Vice versa, when the threshing drum tends to decrease its speed (against a greater power required by the threshing drum during operation) the electric unit 39.2 can convert the electrical energy collected from the storage system 21 through the arrangement of inverters 23 and in this way supply additional power to the threshing drum 13, necessary to maintain the speed constant. The references A and B indicate electrical connections between the electric units 39.1 and 39.2 and the arrangement of inverters 23.

In this way, the continuously variable transmission 37 allows the power delivered to the threshing drum 13 to be increased or decreased, maintaining the operating speed thereof in a tolerance range around the desired value, without altering the rotation speed of the internal combustion engine 11, at least within certain operating limits.

The control system acts by using the signal indicative of the rotation speed of the threshing drum that constitutes the controlled parameter and that can be supplied by the sensor 14. The rotation speed of the internal combustion engine 11 can remain approximately constant as a consequence of control of the electric machines 39.1 and 39.2 as a function of the detected rotation speed of the threshing drum 13. Control of the rotation speed of the internal combustion engine 11 can therefore be omitted.

As mentioned above, in other embodiments only one of the electric units 39.1 and 39.2 may be provided, which can be controlled to operate in motor mode or in generator mode, alternatively, as a function of the variation of rotation speed of the threshing drum, to tend to maintain this speed within a tolerance range around the desired rotation speed value.

Maintaining the rotation speed of the internal combustion engine 11 around a predetermined value, which corresponds to conditions of maximum efficiency of the internal combustion engine, allows a reduction in fuel consumption.

Moreover, due to the fact that in the case of power absorption peaks, the greater power required by the threshing drum is supplied by the electric machine, this allows an internal combustion engine of smaller size to be installed on the combine harvester 1 compared with those currently required. In fact, in a conventional system, the internal combustion engine must be able to supply the full power required in the absorption peaks of the threshing drum 13 and therefore it must be oversized compared to absorption in normal operating conditions. Vice versa, in the configuration described herein, the power absorption peaks supplied by the internal combustion engine are smoothed, as when the control unit detects a reduction of speed of the threshing drum 13, indicative of the fact that more power must be delivered, the control unit 25 requests the delivery of power by the electric machine 39, to make up for the greater demand. The power peak of the internal combustion engine is limited to the one required during the transient phase until the electric system is able to make up for the increased demand for power.

The use of at least two distinct electric machines, one operating as motor (at least one of the electric units 39.1, 39.2) and the other operating as generator (generator group 19 and/or one of the electric units 39.1, 39.2) allows a sufficient level of charge of the storage system 21 to be maintained without the need to oversize the storage system.

Instead of the speed of the functional unit, consisting in this example of the threshing drum, it is possible to use the load or the power absorbed by the threshing drum.

In some embodiments, the control unit 25 can be interfaced with a speed sensor 14 that is adapted to detect the speed of at least two among: the first input of the continuously variable transmission 37, the second input of the continuously variable transmission 37 and the output of the continuously variable transmission. The control unit 25 can also know the power delivered by the electric machine 39, for example determinable based on the supply current and on the supply voltage. Taking account of the principle of equilibrium of the forces at play inside the continuously variable transmission, the aforesaid two speeds and the power delivered by the electric machine 39 being known, it is possible to determine the power that is delivered to the threshing drum 13 by the internal combustion engine 11. The sum of the powers supplied by the electric machine 39 and by the internal combustion engine 11 to the threshing drum 13 is in practice the total power required by the threshing drum, which corresponds to the load applied to the threshing drum.

The control unit 25 can vary the power of the electric machine 39, for example when the power absorbed by the threshing drum 13 varies, so as to maintain the latter in the chosen operating conditions, without overloading or excessively modifying the operating conditions of the internal combustion engine 11. In fact, the latter will be maintained for the greatest time possible around an operating point that optimizes its efficiency.

For example, if from the aforesaid data the control unit 25 detects that the power absorbed by the threshing drum 13 increases, the control unit 25 can vary the power delivered by the electric machine 39, increasing it. This takes place by exploiting the energy stored in the storage system 21. The electric machine 39 can almost immediately deliver a greater mechanical power to the threshing drum 13, so as to avoid an excessive increase of the power delivered by the internal combustion engine 11.

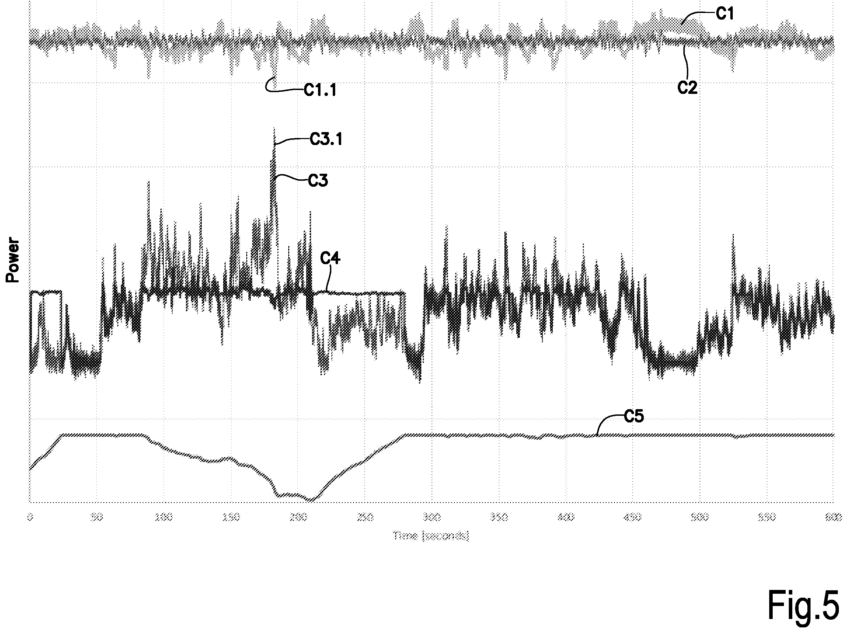

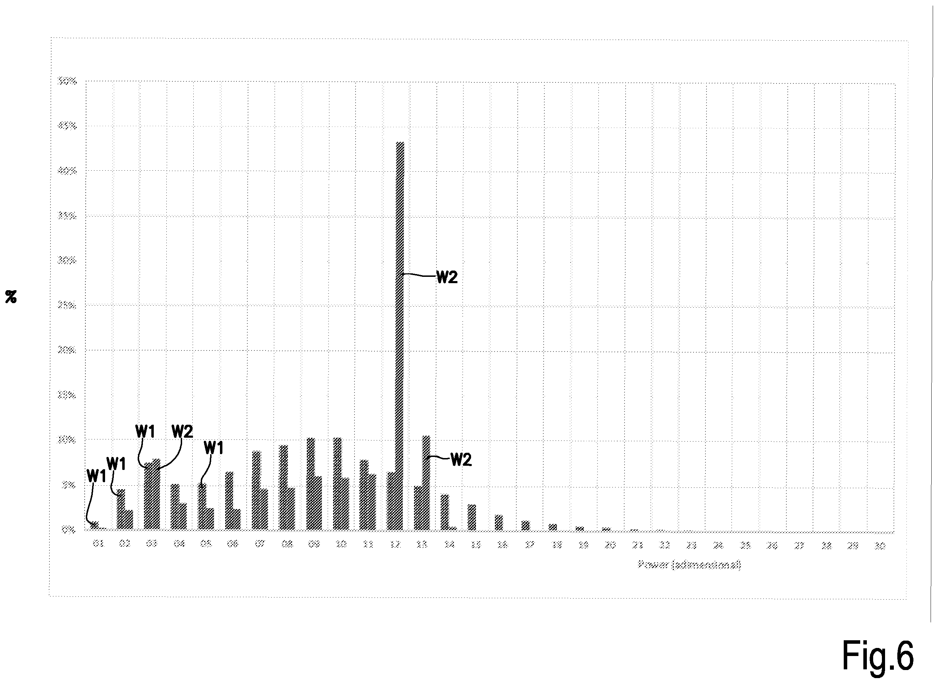

For a better understanding of the method of managing the power flows and of the advantages deriving from the use of the hybrid configuration described herein, reference should be made to the diagrams of Figs. 5 and 6. Fig.5 shows: on the abscissae the time (in seconds) and on the ordinates the power and the speed. More in particular, the curve C1 is the rotation speed, as a function of time, of the threshing drum 13 in a conventional threshing machine, operated by an internal combustion engine. The curve C2 is the rotation speed, as a function of time, of the threshing drum 13 in a combine harvester according to the present disclosure, wherein the threshing drum 13 is operated by a hybrid system comprising the internal combustion engine 11 and the electric machine 39.1, 39.2. The curve C3 is the power, as a function of time, delivered by the internal combustion engine in a prior art combine harvester, equipped with only the internal combustion engine. The curve C4 is the power, as a function of time, delivered by the internal combustion engine in a combine harvester according to the present disclosure. The curve C5 is the level of charge, as a function of time, of the storage system 21.

As can be observed with specific reference to the curve C1, this shows a greater speed variation of the threshing drum compared to the speed variation of the threshing drum 13 in the combine harvester of the present disclosure, equipped with a hybrid system. In other words, due to the combination of the electric machine 39 and of the internal combustion engine 11 via the continuously variable mechanical transmission 37, a much more regular rotation speed of the threshing drum 13 is obtained with respect to a prior art machine.

This more regular trend, advantageous *per se,* is obtained against an advantageous energy behaviour of the internal combustion engine 11. In fact, the curve C3 shows how, at drops in rotation speed (curve C1) of the threshing drum, there are significant demands for peak power from the internal combustion engine and delivered thereby. By way of example, the drop in speed in the point C1.1, to which the internal combustion engine reacts with a strong peak C3.1 of delivered power, can be noted. This fluctuation of the operating conditions of the internal combustion engine causes a deviation thereof from the ideal operating point at maximum efficiency.

When the mechanical power for rotation of the threshing drum 13 is supplied in combination by the internal combustion engine 11 and by the electric machine 39, the respective curves of angular speed (curve C2) and of power delivered by the internal combustion engine 11 (curve C4) show a much more advantageous situation. In fact, the positive and negative peaks of angular speed are less marked. The peaks of power delivered by the internal combustion engine are also less marked. The much less marked fluctuation of the power delivered by the internal combustion engine 11 compared to the case of the prior art machine implies a more regular operation of the internal combustion engine around the point of maximum efficiency and hence a reduction in consumptions.

The curve C5 shows how, at the power peaks in the curve C4, there is a resulting delivery of power by the electric machine 39 with consequent reduction of the charge of the storage system 21. In substance, when the control unit 25 detects a reduction of the angular speed of the threshing drum 13, it activates the power delivery system via the electric machine 39 with consequent energy expenditure by the storage system 21. The reaction time of the system is such that it is not possible to completely eliminate the fluctuations in the power delivered by the internal combustion engine 11 (curve C4), but the peaks thereof can be substantially reduced and smoothed.

In the time ranges (for example between the time 220 and 270) in which the power required by the threshing drum 13 drops, with resulting tendency of the threshing drum to angularly accelerate, the control unit 25 switches the electric machine 39 to generator mode, increasing the mechanical resistance on the axis of the internal combustion engine 11. Consequently, the latter tends to remain at a constant speed (the curve C4 is flat and roughly horizontal) and the excess power produced by the internal combustion engine 11 is used to charge the storage system 21. This charge is shown by the increasing trend of the curve C5 in the time range between the second 220 and the second 270.

The beneficial effects of the described hybrid system can also be highlighted by the data indicated in the histogram of Fig.6. The (adimensional) power delivered by the internal combustion engine is shown on the horizontal axis and the percentage of use at the different powers is shown on the vertical axis. The bars indicated with W1 represent the power delivered by an internal combustion engine of a conventional combine harvester. The bars W2 represent the power delivered by the internal combustion engine 11 in the combine harvester 1 of the present disclosure. The histogram is calculated on the data indicated in Fig.5. It shall be noted that in the case of internal combustion engine 11 used in hybrid configuration, i.e., combined with the electric machine 39 and the continuously variable transmission, the internal combustion engine 11 delivers a power of 12 (adimensional) for around 45% of the time, during this time range the internal combustion engine remaining in conditions of maximum efficiency. The power delivered at speeds different from the optimal speed is almost always considerably less in the case of hybrid system (bars W2) compared to the conventional system (bars W1) and in particular the use at speeds higher than the optimal speed is reduced almost to zero. This would allow the use of an internal combustion engine with a lower maximum power to perform the same work.

It can be observed from the diagram in Fig.6 that the hybrid system disclosed herein requires a power from the internal combustion engine 11 whose maximum value (adimensional scale on the abscissa) is always much lower than the maximum power required from the internal combustion engine in a conventional combine harvester. The diagram shows, in particular, that the maximum power required from the internal combustion engine 11 in the case of hybrid drive is below 19 (adimensional quantity), while in a convention combine harvester in some situations the internal combustion engine is required to deliver powers greater than 26 (adimensionalized quantity). Therefore, the hybrid configuration allows a reduction in the size of the internal combustion engine, as well as optimizing the efficiency thereof.

In brief, the described system tends to maintain the speed of the threshing drum 13 around a required value by varying the power delivered by the electric system or absorbed by the electric system. In this way, the internal combustion engine 11 is automatically maintained at a steady state condition as close as possible to the condition of maximum efficiency, in line with the rapidity of the power variations required by the threshing drum 13 and with the intervention speed (reaction time) of the control system of the electric part of the system.

While a hybrid system for driving the threshing drum 13 has been described above, it must be understood that the same driving and control logic can be used for other functional units, as briefly described below.

The harvest head 3 can be driven by a hybrid arrangement similar to the one described with reference to driving of the threshing drum 13, directly using mechanical power generated by the internal combustion engine 11 and electrical power delivered through the arrangement of inverters 23 or input into the storage system 21 again through the arrangement of inverters 23, depending on the operating conditions.

For this purpose, a further mechanical connection 41, which transmits power from the output of the internal combustion engine 11 to the harvest head 3 and, as described below, to the feed channel 15, can be connected to the coupler 17. The mechanical connection 41 can comprise a clutch 43, for example an electromagnetic clutch, which is functionally connected to the control unit 25 and can be engaged or disengaged to transmit, or not transmit, mechanical power generated by the internal combustion engine 11 directly to the harvest head 3 and to the feed channel 15.

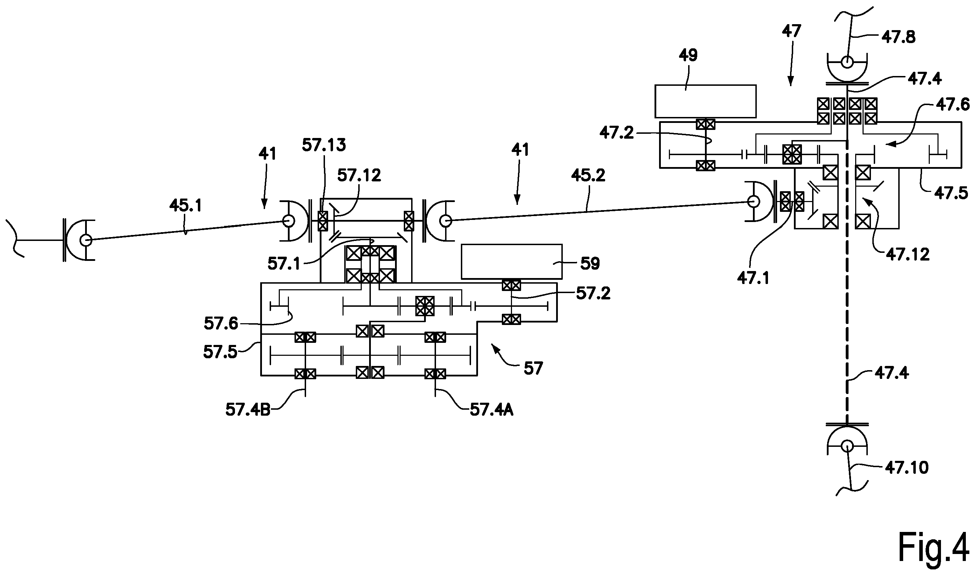

The mechanical connection 41 can comprise a series of shafts, for example drive shafts, schematically indicated with 45.1 and 45.2 (Figs. 2 and 4), which transmit motion to a first input 47.1 of a mechanical transmission 47, for example a continuously variable transmission. A diagram of a possible configuration of the continuously variable mechanical transmission 47 is illustrated in Fig. 4. The continuously variable mechanical transmission 47 is combined with a single electric machine 49 that can operate in generator mode or in motor mode and which is functionally connected to the control unit 25,

In other embodiments, not shown, the continuously variable transmission 47 can comprise two electric units, as schematically shown for the continuously variable transmission 37.

In the illustrated embodiment, two electric units 39.1 and 39.2 are associated with the threshing drum 13, while a single electric unit is associated with other functional units (such as the harvest head). This is due to the fact that the threshing drum is the member of the combine harvester that has the highest rated power absorption. It does not absorb the highest power with all crops, but the power required for certain crops makes it the member with the highest (installed) rated power. Moreover, it is the member that requires the greatest speed variation: the ratio between minimum speed and maximum speed can reach 1:6, while the other members require much more limited variations, in general with a ratio below 1:2.

In CVT transmissions, the high power required, in combination with the wide speed range, require the use of high power components that manage the variations (in this case the electric motors or electric units 39.1, 39.2). In this situation it may be more beneficial to have a dedicated electric machine or unit that acts as generator which directly feeds the electric motor. The alternative would be to have a generator with much higher rated power on the coupler.

Instead, for the other functions of the machine, the reduced speed range allows the use of electric machines or units with lower rated powers that it may be more appropriate to supply via a "single" slightly larger generator installed on the coupler.

The continuously variable mechanical transmission 47 comprises a first mechanical power input 47.1 (see Fig.4), to which the input shaft 45.2 is connected, and a second input 47.2 to which the electric unit 49 is connected. The continuously variable mechanical transmission 47 further comprises an output 47.4 connected to the harvest head. The output 47.4 is preferably double, to control two drive shafts 47.8, 47.10.

The reference number 47.6 indicates an epicyclic gearing, housed in a case 47.5 of the continuously variable transmission 47. Motion is transmitted to the epicyclic gearing 47.6 through a bevel gear 47.12, interposed between the gearing and the input 47.1.

Similarly to the epicyclic gearing 37.6 of the continuously variable transmission 37, via the epicyclic gearing 47.6 it is possible to combine the mechanical power input through the shaft 45.2 with the mechanical power that flows through the electric machine 49. The latter is controlled by the control unit 25 so as to maintain the speed of the harvest head 3 constant, or at least within a tolerance range.

In the illustrated configuration, the electric machine 49 operates either as generator or as motor as a function of the rotation speed set for the harvest head. The power variations, which can be caused by torque peaks, are managed by drawing from the storage system 21 when operating in motor mode or feeding (charging) this storage system 21 when operating as generator, in this way maintaining the power transmitted by the shaft 45.2, and hence the contribution of power required from the internal combustion engine 11, constant.

Similarly to the threshing drum 13, the control unit 25 does not require to control the rotation speed of the internal combustion engine 11.

In the diagram of Fig.2, reference number 48 indicates a rotation speed sensor of the harvest head, functionally connected to the control unit 25. Via the signal of the sensor 48 it is possible to perform a control of the electric machine 49 with the same logic described with reference to the electric machine 39.

In the illustrated embodiment, the feed channel 15 is also controlled by a hybrid arrangement comprising a continuously variable transmission, advantageously containing an epicyclic gearing. The structure of the transmission that controls the feed channel 15 is described below, again with reference to Figs.2 and 4.

The shaft 45.1 (Figs. 2 and 4) transmits motion to a first input 57.1 of a mechanical transmission 57, for example a continuously variable transmission. A diagram of a possible configuration of the continuously variable mechanical transmission 57 is shown in Fig. 4. The continuously variable mechanical transmission 57 is combined with a single electric machine 59 which can operate in generator mode or in motor mode and which is functionally connected to the control unit 25.

In other embodiments, not shown, the continuously variable transmission 57 can comprise two electric units, as schematically shown for the continuously variable transmission 37.

More precisely, the continuously variable transmission 57 comprises a first mechanical power input 57.1 (see Fig.4) connected to the shaft 45.1 via a bevel gear 57.12, to which motion is transmitted via an input shaft 57.13. The mechanically variable transmission 57 further comprises a second input 57.2 to which the electric machine 59 is connected and a double output 57.4A, 57.4B. The output 57.4A controls the feed channel 15, while, if provided, the output 57.4B can control a member for removing stones and other debris, schematically indicated with 81 and known *per se.*

Reference number 57.6 indicates an epicyclic gearing, housed in a case 57.5 of the continuously variable transmission 57. Similarly to the epicyclic gearing 37.6 of the continuously variable transmission 37, via the epicyclic gearing 57.6 it is possible combine the mechanical power input through the shaft 45.1 with the mechanical power that flows through the electric machine 59. The latter is controlled by the control unit 25 so as to maintain the speed of the feed channel 15 constant, or at least within a tolerance range.

In the illustrated configuration, the electric machine 59 operates either as generator or as motor as a function of the rotation speed set for the feed channel. The power variations, which can be caused by torque peaks, or by the need to temporarily vary the speed of the channel due to excess material, are managed by drawing from the storage system 21 when operating in motor mode or feeding (charging) the storage system 21 when operating as generator, in this way maintaining the power transmitted by the shaft 45.2, and hence the contribution of power required from the internal combustion engine 11, constant.

In Fig.2, reference number 58 indicates a speed sensor that communicates the speed of the feed channel 15 to the control unit 25.

The control of the electric machine 59 can take place in a similar manner as described with reference to the electric machine 39 for hybrid drive of the threshing drum 13.

Similarly to the threshing drum and the harvest head, the control unit 25 does not require to control the rotation speed of the internal combustion engine 11.

Possible speed variations of one or other of the described functional units may be required by varying operating conditions. In this case, it is always the control unit 25 that can act on the electric machines described above to take the speed of the respective functional unit to the desired value.

The diagram of Fig.2 also shows electric motors 83 associated with the driving wheels 5 and functionally connected to the control unit 25. The electric motors 83 are supplied through the arrangement of inverters 23 and supply the power for forward movement, i.e., travel, of the combine harvester 1.

By way of example, in the embodiment illustrated in Fig.2, the internal combustion engine 11 is associated with a cooling system that can comprise a radiator 87 and a cooling fan driven by an electric motor 85, electrically supplied through the arrangement of inverters 23.

## Claims

1. A self-propelled combine harvester (1) comprising:
an internal combustion engine (11);
at least a first electric machine (19), mechanically connected to the internal combustion engine (11) and adapted mainly to convert mechanical power generated by the internal combustion engine (11) into electrical power;
a storage system (21) for storing energy generated by the first electric machine (19);
a first mechanical transmission (37, 47, 57) which connects the internal combustion engine (11) to a first functional unit (3; 13; 15); wherein the first mechanical transmission (37, 47, 57) is combined with a second electric machine (39; 49; 59) configured to operate at least in motor mode and electrically connected to the storage system (21) to receive electrical energy from the storage system;
a control unit (25) configured to control at least the second electric machine (39; 49; 59) as a function of at least one operating parameter of the first functional unit (3; 13; 15);
wherein the first mechanical transmission (37, 47, 57) comprises a first continuously variable transmission, comprising: a first input (37.1; 47.1; 57.1) mechanically connected to the internal combustion engine (11), a second input (37.2; 47.2; 57.2) mechanically connected to the second electric machine (39), and an output (37.4; 47.4; 57.4A, 57.4B) connected to the first functional unit (3; 13; 15).

2. The combine harvester (1) of claim 1, wherein the control unit (25) is configured to also control the first electric machine (19) as a function of the operating parameter of the first functional unit (3; 13; 15).

3. The combine harvester (1) of claim 1 or 2, wherein the operating parameter is selected from the group comprising: the speed of the first functional unit (3; 13; 15).; the power absorbed by the first functional unit (3; 13; 15); a combination thereof.

4. The combine harvester (1) of one or more of the preceding claims, wherein the first functional unit (3; 13; 15) comprises at least one of: a threshing drum (13), a harvest head, a feed channel (15) between the harvest head (3) and the threshing drum (13), a combination thereof.

5. The combine harvester (1) of one or more of the preceding claims, wherein the control unit (25) is adapted to control the second electric machine (39; 49; 59) so as to:
deliver power to the first functional unit (3; 13; 15) by means of the second electric machine (39; 49; 59), if the speed of the first functional unit (3; 13; 15) tends to decrease, or if the power absorbed by the first functional unit (3; 13; 15) tends to increase; and
absorb mechanical power from the first functional unit (3; 13; 15) and transform it into electrical power towards the storage system (21) if the speed of the first functional unit (3; 13; 15) tends to increase, or if the power absorbed by the first functional unit (3; 13; 15) tends to decrease.

6. The combine harvester (1) of one or more of the preceding claims, wherein the second electric machine (39; 49; 59) comprises an electric motor and an electric generator, connected to a first input shaft of said first input (37.1; 47.1; 57.1) and to a second input shaft of said first input (37.1; 47.1; 57.1) of the first continuously variable transmission (37, 47, 57), respectively.

7. The combine harvester (1) of one or more of the preceding claims, wherein: the combine harvester (1) comprises a second mechanical transmission (37, 47, 57) which connects the internal combustion engine (11) to a second functional unit (3; 13; 15); the second mechanical transmission (37, 47, 57) comprises a second continuously variable transmission, comprising: a first input (37.1; 47.1; 57.1) mechanically connected to the internal combustion engine (11), a second input (37.2; 47.2; 57.2) mechanically connected to a third electric machine (39; 49; 59), and an output connected to the second functional unit (3; 13; 15); the third electric machine (39; 49; 59) is configured to operate at least in motor mode and electrically connected to the storage system (21) to receive electric energy from the storage system; and the control unit (25) is configured to control the third electric machine (39; 49; 59) as a function of at least one operating parameter of the second functional unit (3; 13; 15), in particular of the speed of the second functional unit (3; 13; 15), of the power absorbed by the second functional unit (3; 13; 15), or a combination thereof.

8. The combine harvester (1) of claim 7, wherein the second functional unit comprises a harvest head (3).

9. The combine harvester (1) of one or more of the preceding claims, wherein: the combine harvester (1) comprises a third mechanical transmission (37, 47, 57) which connects the internal combustion engine (11) to a third functional unit (3; 13; 15); wherein the third mechanical transmission (37, 47, 57) comprises a third continuously variable transmission, comprising: a first input (37.1; 47.1; 57.1) mechanically connected to the internal combustion engine (11), a second input (37.2; 47.2; 57.2) mechanically connected to a fourth electric machine (39; 49; 59), and an output connected to the third functional unit (3; 13; 15); the fourth electric machine (39; 49; 59) is configured to operate at least in motor mode and electrically connected to the storage system (21) to receive electric energy from the storage system; and the control unit (25) is configured to control the fourth electric machine (39; 49; 59) as a function of at least one operating parameter of the third functional unit (3; 13; 15), in particular of the speed of the third functional unit (3; 13; 15), of the power absorbed by the third functional unit (3; 13; 15), or a combination thereof.

10. The combine harvester (1) of claim 9, wherein the third functional unit comprises a feed channel (15) between the harvest head (3) and the threshing drum (13).

11. The combine harvester (1) of one or more of the preceding claims, wherein each electric machine (19; 39; 49; 59) is adapted to operate in motor mode or in generator mode; and wherein each electric machine comprises:
an electric unit having a rotor and a stator, configured to operate alternately in motor mode and in generator mode; or
a first electric unit having a rotor and a stator, adapted to operate mainly or exclusively in motor mode and a second electric unit having a rotor and a stator, adapted to operate mainly or exclusively in generator mode.

12. The combine harvester (1) of one or more of the preceding claims, wherein at least one and preferably each continuously variable transmission comprises an epicyclic gearing (37.6; 57.6).

13. The combine harvester (1) of one or more of the preceding claims, comprising a plurality of driving wheels (5) driven by at least one electric motor (83), connected to the storage system (21).

14. The combine harvester (1) of one or more of the preceding claims, comprising a cooling fan of the internal combustion engine (11), driven by an electric motor (85), connected to the storage system (21).

15. The combine harvester (1) of one or more of the preceding claims, comprising a coupler (17) between the internal combustion engine (11) and each of said mechanical transmissions (37, 47, 57).

16. The combine harvester (1) of claim 15, wherein the first electric machine (19) is mechanically connected to the internal combustion engine (11) via said coupler (17).

17. The combine harvester (1) of one or more of the preceding claims, wherein the control unit (25) is configured to detect: the rotation speed of at least the first functional unit (3; 13; 15), or the power absorbed by the first functional unit (3; 13; 15), and to control at least the second electric machine (39; 49; 59) so as to respond to a variation of the power absorbed by the functional unit (3; 13; 15) with respect to a pre-set value, with a variation of the power delivered by the second electric machine (39; 49; 59) to the functional unit(3; 13; 15).

18. A method for managing a combine harvester (1), comprising: an internal combustion engine (11); at least a first electric machine (19), mechanically connected to the internal combustion engine (11) and adapted to convert mechanical power generated by the internal combustion engine (11) into electrical power; a storage system (21) for storing energy generated by the first electric machine (19); a first mechanical transmission (37, 47, 57) which connects the internal combustion engine (11) to a first functional unit (3; 13; 15); wherein the first mechanical transmission (37, 47, 57) is combined with a second electric machine (39; 49; 59) configured to operate at least in motor mode and electrically connected to the storage system (21) to receive electrical energy from the storage system (21); and wherein the first mechanical transmission comprises (37, 47, 57) a continuously variable transmission, comprising: a first input (37.1; 47.1; 57.1) mechanically connected to the internal combustion engine (11), a second input (37.2; 47.2; 57.2) mechanically connected to the second electric machine (39; 49; 59), and an output (37.4; 47.4; 57.4A, 57.4B) connected to the first functional unit (3; 13; 15); a control unit (25) configured to control the second electric machine (39; 49; 59) as a function of at least one operating parameter of the first functional unit (3; 13; 15), in particular of the speed of the first functional unit, of the power absorbed by the first functional unit, or a combination thereof, the method comprising the steps of:
rotating the first electric machine (19) with the internal combustion engine (11) and producing electrical power;
feeding the electrical power to the storage system (21);
via the control unit (25), detecting a variation of said at least one operating parameter of the first functional unit (3; 13; 15); and
responsive to the variation of the operating parameter of the first functional unit (3; 13; 15), varying the power delivered by the second electric machine (39; 49; 59) to the first functional unit (3; 13; 15) through the first mechanical transmission (37, 47, 57).

19. The method of claim 18, wherein the first functional unit comprises at least one of: a threshing drum (13), a harvest head (3), a feed channel (15) between the harvest head (3) and the threshing drum (13), a combination thereof.

## Patentansprüche

1. Ein selbstfahrender Mähdrescher (1), umfassend:
- einen Verbrennungsmotor (11);
- mindestens eine erste elektrische Maschine (19), die mechanisch mit dem Verbrennungsmotor (11) verbunden ist und hauptsächlich dazu dient, die vom Verbrennungsmotor (11) erzeugte mechanische Leistung in elektrische Leistung umzuwandeln;
- ein Speichersystem (21) zum Speichern der von der ersten elektrischen Maschine (19) erzeugten Energie;
- ein erstes mechanisches Getriebe (37, 47, 57), das den Verbrennungsmotor (11) mit einer ersten Funktionseinheit (3; 13; 15) verbindet; wobei das erste mechanische Getriebe (37, 47, 57) mit einer zweiten elektrischen Maschine (39; 49; 59) verbunden ist, die eingerichtet ist, zumindest im Motorbetrieb zu arbeiten, und elektrisch mit dem Speichersystem (21) verbunden ist, um elektrische Energie aus dem Speichersystem zu beziehen;
- eine Steuereinheit (25), die so eingerichtet ist, dass sie zumindest die zweite elektrische Maschine (39; 49; 59) in Abhängigkeit von mindestens einem Betriebsparameter der ersten Funktionseinheit (3; 13; 15) steuert;
wobei das erste mechanische Getriebe (37, 47, 57) ein erstes stufenlos verstellbares Getriebe umfasst, das Folgendes umfasst: einen ersten Eingang (37.1; 47.1; 57.1), der mechanisch mit dem Verbrennungsmotor (11) verbunden ist, einen zweiten Eingang (37.2, 47.2, 57.2), der mechanisch mit der zweiten elektrischen Maschine (39) verbunden ist, und einen Ausgang (37.4; 47.4; 57.4A, 57.4B), der mit der ersten Funktionseinheit (3; 13; 15) verbunden ist.

2. Mähdrescher (1) gemäß Anspruch 1, wobei die Steuereinheit (25) so eingerichtet ist, dass sie auch die erste elektrische Maschine (19) in Abhängigkeit von dem Betriebsparameter der ersten Funktionseinheit (3; 13; 15) steuert.

3. Mähdrescher (1) gemäß Anspruch 1 oder 2, wobei der Betriebsparameter aus einer Gruppe ausgewählt ist, die Folgendes umfasst: die Geschwindigkeit der ersten Funktionseinheit (3; 13; 15); die Leistungsaufnahme der ersten Funktionseinheit (3; 13; 15); eine Kombination davon.

4. Mähdrescher (1) gemäß einem oder mehreren der vorangegangenen Ansprüche, wobei die erste Funktionseinheit (3; 13; 15) mindestens eines der folgenden Elemente umfasst: eine Dreschtrommel (13), einen Erntekopf, einen Zuführkanal (15) zwischen dem Erntekopf (3) und der Dreschtrommel (13), eine Kombination davon.

5. Mähdrescher (1) gemäß einem oder mehreren der vorangegangenen Ansprüche, wobei die Steuereinheit (25) dazu ausgebildet ist, die zweite elektrische Maschine (39; 49; 59) so zu steuern, dass:
- der ersten Funktionseinheit (3; 13; 15) mittels der zweiten elektrischen Maschine (39; 49; 59) Leistung zugeführt wird, wenn die Drehzahl der ersten Funktionseinheit (3; 13; 15) dazu neigt, abzunehmen, oder wenn die von der ersten Funktionseinheit (3; 13; 15) aufgenommene Leistung dazu neigt, zuzunehmen; und
- mechanische Leistung von der ersten Funktionseinheit (3; 13; 15) aufgenommen und in elektrische Leistung umgewandelt wird, die an das Speichersystem (21) abgegeben wird, wenn die Geschwindigkeit der ersten Funktionseinheit (3; 13; 15) dazu neigt, zu steigen, oder wenn die von der ersten Funktionseinheit (3; 13; 15) aufgenommene Leistung dazu neigt, abzunehmen.

6. Mähdrescher (1) gemäß einem oder mehreren der vorangegangenen Ansprüche, wobei die zweite elektrische Maschine (39; 49; 59) einen Elektromotor und einen elektrischen Generator umfasst, die jeweils mit einer ersten Eingangswelle des ersten Eingangs (37.1; 47.1; 57.1) und mit einer zweiten Eingangswelle des ersten Eingangs (37.1; 47.1; 57.1) des ersten stufenlos verstellbaren Getriebes (37, 47, 57) verbunden sind.

7. Mähdrescher (1) gemäß einem oder mehreren der vorangegangenen Ansprüche, wobei: der Mähdrescher (1) ein zweites mechanisches Getriebe (37, 47, 57) umfasst, das den Verbrennungsmotor (11) mit einer zweiten Funktionseinheit (3; 13; 15) verbindet; das zweite mechanische Getriebe (37, 47, 57) ein zweites stufenlos verstellbares Getriebe umfasst, das Folgendes umfasst: einen ersten Input (37.1; 47.1; 57.1), der mechanisch mit dem Verbrennungsmotor (11) verbunden ist, einen zweiten Input (37.2; 47.2; 57.2), der mechanisch mit einer dritten elektrischen Maschine (39; 49; 59) mechanisch verbunden ist, sowie einen mit der zweiten Funktionseinheit (3; 13; 15) verbundenen Ausgang, wobei die dritte elektrische Maschine (39, 49; 59) dazu eingerichtet ist, zumindest im Motorbetrieb zu arbeiten, und elektrisch mit dem Speichersystem (21) verbunden ist, um elektrische Energie aus dem Speichersystem zu beziehen; und die Steuereinheit (25) dazu eingerichtet ist, die dritte elektrische Maschine (39; 49; 59) in Abhängigkeit von mindestens einem Betriebsparameter der zweiten Funktionseinheit (3; 13; 15) zu steuern, insbesondere von der Geschwindigkeit der zweiten Funktionseinheit (3; 13; 15), der von der zweiten Funktionseinheit (3; 13; 15) aufgenommenen Leistung oder einer Kombination davon.

8. Mähdrescher (1) gemäß Anspruch 7, wobei die zweite Funktionseinheit einen Erntekopf (3) umfasst.

9. Mähdrescher (1) gemäß einem oder mehreren der vorangegangenen Ansprüche, wobei: der Mähdrescher (1) ein drittes mechanisches Getriebe (37, 47, 57) umfasst, das den Verbrennungsmotor (11) mit einer dritten Funktionseinheit (3; 13; 15) verbindet, wobei das dritte mechanische Getriebe (37, 47, 57) ein drittes stufenlos verstellbares Getriebe umfasst, das Folgendes umfasst: einen ersten Input (37.1; 47.1; 57.1), der mechanisch mit dem Verbrennungsmotor (11) verbunden ist, einen zweiten Input (37.2; 47.2; 57.2), der mechanisch mit einer vierten elektrischen Maschine (39; 49; 59) verbunden ist, und einen Ausgang, der mit der dritten Funktionseinheit (3; 13; 15) verbunden ist; die vierte elektrische Maschine (39; 49; 59) ist dazu eingerichtet, zumindest im Motorbetrieb zu arbeiten, und elektrisch mit dem Speichersystem (21) verbunden ist, um elektrische Energie aus dem Speichersystem zu beziehen; und die Steuereinheit (25) ist dazu eingerichtet, die vierte elektrische Maschine (39; 49; 59) in Abhängigkeit von mindestens einem Betriebsparameter der dritten Funktionseinheit (3; 13; 15), insbesondere von der Geschwindigkeit der dritten Funktionseinheit (3; 13; 15), der von der dritten Funktionseinheit (3; 13; 15) aufgenommenen Leistung oder einer Kombination davon, zu steuern.

10. Mähdrescher (1) gemäß Anspruch 9, wobei die dritte Funktionseinheit einen Zuführkanal (15) zwischen dem Erntekopf (3) und der Dreschtrommel (13) umfasst.

11. Mähdrescher (1) gemäß einem oder mehreren der vorangegangenen Ansprüche, wobei jede elektrische Maschine (19; 39; 49; 59) dazu ausgelegt ist, im Motorbetrieb oder im Generatorbetrieb zu arbeiten; und wobei jede elektrische Maschine umfasst:
- eine elektrische Einheit mit einem Rotor und einem Stator, die so eingerichtet ist, dass sie abwechselnd im Motorbetrieb und im Generatorbetrieb arbeitet; oder
- eine erste elektrische Einheit, die einen Rotor und einen Stator aufweist und dafür ausgelegt ist, hauptsächlich oder ausschließlich im Motorbetrieb zu arbeiten, und eine zweite elektrische Einheit, die einen Rotor und einen Stator aufweist und dafür ausgelegt ist, hauptsächlich oder ausschließlich im Generatorbetrieb zu arbeiten.

12. Mähdrescher (1) gemäß einem oder mehreren der vorangegangenen Ansprüche, wobei mindestens ein und vorzugsweise jedes stufenlos verstellbare Getriebe ein Planetengetriebe (37.6; 57.6) umfasst.

13. Mähdrescher (1) gemäß einem oder mehreren der vorangegangenen Ansprüche, umfassend eine Vielzahl von Antriebsrädern (5), die von mindestens einem Elektromotor (83) angetrieben werden, der mit dem Speichersystem (21) verbunden ist.

14. Mähdrescher (1) gemäß einem oder mehreren der vorangegangenen Ansprüche, der einen Kühlventilator für den Verbrennungsmotor (11) umfasst, der von einem Elektromotor (85) angetrieben wird, der mit dem Speichersystem (21) verbunden ist.

15. Mähdrescher (1) gemäß einem oder mehreren der vorangegangenen Ansprüche, umfassend eine Kupplung (17) zwischen dem Verbrennungsmotor (11) und jedem der mechanischen Getriebe (37, 47, 57).

16. Mähdrescher (1) gemäß Anspruch 15, wobei die erste elektrische Maschine (19) über die Kupplung (17) mechanisch mit dem Verbrennungsmotor (11) verbunden ist.

17. Mähdrescher (1) gemäß einem oder mehreren der vorangegangenen Ansprüche, wobei die Steuereinheit (25) dazu eingerichtet ist, die Drehzahl zumindest der ersten Funktionseinheit (3; 13; 15) oder die Leistungsaufnahme der ersten Funktionseinheit (3; 13; 15) zu erfassen und zumindest die zweite elektrische Maschine (39; 49; 59) so zu steuern, dass auf eine Abweichung der von der Funktionseinheit (3; 13; 15) aufgenommenen Leistung von einem voreingestellten Wert mit einer Änderung der von der zweiten elektrischen Maschine (39; 49; 59) an die Funktionseinheit (3; 13; 15) abgegebenen Leistung reagiert wird.

18. Verfahren zum Steuern eines Mähdreschers (1), umfassend: einen Verbrennungsmotor (11); mindestens eine erste elektrische Maschine (19), die mechanisch mit dem Verbrennungsmotor (11) verbunden und ausgebildet ist, von dem Verbrennungsmotor (11) erzeugte mechanische Leistung in elektrische Leistung umzuwandeln; ein Speichersystem (21) zum Speichern von durch die erste elektrische Maschine (19) erzeugter Energie; ein erstes mechanisches Getriebe (37, 47, 57), das den Verbrennungsmotor (11) mit einer ersten Funktionseinheit (3; 13; 15) verbindet; wobei das erste mechanische Getriebe (37, 47, 57) mit einer zweiten elektrischen Maschine (39; 49; 59) kombiniert ist, die dazu eingerichtet ist, zumindest im Motorbetrieb zu arbeiten, und elektrisch mit dem Speichersystem (21) verbunden ist, um elektrische Energie vom Speichersystem (21) zu empfangen; und wobei das erste mechanische Getriebe (37, 47, 57) ein stufenlos verstellbares Getriebe umfasst, das Folgendes umfasst: einen ersten Eingang (37.1; 47.1; 57.1), der mechanisch mit dem Verbrennungsmotor (11) verbunden ist, einen zweiten Eingang (37.2; 47.2; 57.2), der mechanisch mit der zweiten elektrischen Maschine (39; 49; 59) verbunden ist, und einen Ausgang (37.4; 47.4; 57.4A, 57.4B), der mit der ersten Funktionseinheit (3; 13; 15) verbunden ist; eine Steuereinheit (25), die dazu eingerichtet ist, die zweite elektrische Maschine (39; 49; 59) in Abhängigkeit von mindestens einem Betriebsparameter der ersten Funktionseinheit (3; 13; 15), insbesondere der Geschwindigkeit der ersten Funktionseinheit, der Leistungsaufnahme der ersten Funktionseinheit oder einer Kombination davon, zu steuern; das Verfahren umfasst die folgenden Schritte:
- Antreiben der ersten elektrischen Maschine (19) mit dem Verbrennungsmotor (11) und Erzeugen elektrischer Leistung;
- Einspeisen der elektrischen Leistung in das Speichersystem (21);
- Erfassen einer Änderung des mindestens einen Betriebsparameters der ersten Funktionseinheit (3; 13; 15) über die Steuereinheit (25); und
- Variieren der von der zweiten elektrischen Maschine (39; 49; 59) über das erste mechanische Getriebe (37, 47, 57) an die erste Funktionseinheit (3; 13; 15) abgegebenen Leistung in Reaktion auf die Änderung des Betriebsparameters der ersten Funktionseinheit (3; 13; 15).

19. Verfahren gemäß Anspruch 18, wobei die erste Funktionseinheit mindestens eines der folgenden Elemente umfasst: eine Dreschtrommel (13), einen Erntekopf (3), einen Zuführkanal (15) zwischen dem Erntekopf (3) und der Dreschtrommel (13), eine Kombination davon.

## Revendications

1. Moissonneuse-batteuse automotrice (1) comprenant :
un moteur à combustion interne (11) ;
au moins une première machine électrique (19), connectée mécaniquement au moteur à combustion interne (11) et apte principalement à convertir l'énergie mécanique générée par le moteur à combustion interne (11) en énergie électrique ;
un système de stockage (21) pour stocker l'énergie générée par la première machine électrique (19) ;
une première transmission mécanique (37, 47, 57) qui connecte le moteur à combustion interne (11) à une première unité fonctionnelle (3 ; 13 ; 15) ; la première transmission mécanique (37, 47, 57) étant combinée à une deuxième machine électrique (39 ; 49 ; 59) configurée pour fonctionner au moins en mode moteur et connectée électriquement au système de stockage (21) pour recevoir de l'énergie électrique provenant du système de stockage ;
une unité de commande (25) configurée pour commander au moins la deuxième machine électrique (39 ; 49 ; 59) en fonction d'au moins un paramètre de fonctionnement de la première unité fonctionnelle (3 ; 13 : 15) ;
dans laquelle la première transmission mécanique (37, 47, 57) comprend une première transmission variable en continu, comprenant : une première entrée (37.1 ; 47.1 ; 57 ;1) mécaniquement connectée au moteur à combustion interne (11), une deuxième entrée (37.2 ; 47.2 ; 57.2) mécaniquement connectée à la deuxième machine électrique (39), et une sortie (37.4 ; 47.4 ; 57.4A, 57.4B) connectée à la première unité fonctionnelle (3 ; 13 ; 15).

2. La moissonneuse-batteuse (1) selon la revendication 1 ou 2, dans laquelle l'unité de commande (25) est configuré pour commander également la première machine électrique (19) en fonction du paramètre de fonctionnement de la première unité fonctionnelle (3 ; 13 ; 15).

3. La moissonneuse-batteuse (1) selon la revendication 1 ou 2, dans laquelle le paramètre de fonctionnement est choisi dans le groupe comprenant : la vitesse de la première unité fonctionnelle (3 ; 13 ; 15), l'énergie absorbée par la première unité fonctionnelle (3 ; 13 ; 15) et une combinaison des deux.

4. La moissonneuse-batteuse (1) selon l'une ou plusieurs des revendications précédentes, dans laquelle la première unité fonctionnelle (3 ; 13 ; 15) comprend au moins l'un des éléments suivants : un tambour de battage (13), une tête de récolte, un canal d'alimentation (15) entre la tête de récolte (3) et le tambour de battage (13) et une combinaison de ces éléments.

5. La moissonneuse-batteuse (1) selon l'une ou plusieurs des revendications précédentes, dans laquelle l'unité de commande (25) est apte à commander la deuxième machine électrique (39 ; 49 ; 59) de façon à :
fournir de l'énergie à la première unité fonctionnelle (3 ; 13 ; 15) au moyen de la deuxième machine électrique (39 ; 49 ; 59), si la vitesse de la première unité fonctionnelle (3 ; 13 ; 15) tend à décroître ou si l'énergie absorbée par la première unité fonctionnelle (3, 13, 15) tend à croître ; et
absorber de l'énergie mécanique provenant de la première unité fonctionnelle (3 ; 13 ; 15) et la transformer en énergie électrique vers le système de stockage (21) si la vitesse de la première unité fonctionnelle (3 ; 13 ; 15) tend à croître, ou si l'énergie absorbée par la première unité fonctionnelle (3 ; 13 ; 15) tend à décroître.

6. La moissonneuse-batteuse (1) selon l'une ou plusieurs des revendications précédentes, dans laquelle la deuxième machine électrique (39 ; 49 ; 59) comprend un moteur électrique et un générateur électrique relié à un premier arbre d'entrée de ladite première entrée (37.1 ; 47.1 ; 57.1) et à un deuxième arbre d'entrée de ladite première entrée (37.1 ; 47.1 ; 57.1) de la première transmission variable en continu (37, 47, 57), respectivement.

7. La moissonneuse-batteuse (1) selon l'une ou plusieurs des revendications précédentes, dans laquelle : la moissonneuse-batteuse (1) comprend un deuxième mécanisme de transmission (37, 47, 47) qui connecte le moteur à combustion interne (11) à une deuxième unité fonctionnelle (3 ; 13 ; 15) ; la deuxième transmission mécanique (37, 47, 57) comprenant une deuxième transmission variable en continu comprenant : une première entrée (37.1 ; 47.1 ; 57.1) connectée mécaniquement au moteur à combustion interne (11), une deuxième entrée (37.2 ; 47.2 ; 57.2) connectée mécaniquement à une troisième machine électrique (39 : 49 ; 59) et une sortie connectée à la deuxième unité fonctionnelle (3 ; 13 ; 15) ; la troisième machine électrique (39 ; 49 ; 59) étant configurée pour fonctionner au moins en mode moteur et connectée électriquement au système de stockage (21) pour recevoir de l'énergie électrique provenant du système de stockage ; et l'unité de commande (25) étant configurée pour commander la troisième machine électrique (39 ; 49 ; 59) en fonction d'au moins un paramètre de fonctionnement de la deuxième unité fonctionnelle (3 ; 13 ; 15), en particulier de la vitesse de la deuxième unité fonctionnelle (3 ; 13 ; 15), de l'énergie absorbée par la deuxième unité fonctionnelle (3 ; 13 ; 15) ou d'une combinaison des deux.

8. La moissonneuse-batteuse (1) selon la revendication 7, dans laquelle la deuxième unité fonctionnelle comprend un tête de récolte (3).

9. La moissonneuse-batteuse (1) selon l'une ou plusieurs des revendications précédentes, dans laquelle : la moissonneuse-batteuse (1) comprend une troisième transmission mécanique (37, 47, 57) qui connecte le moteur à combustion interne (11) à une troisième unité fonctionnelle (3 ; 13 ; 15) ; la troisième transmission mécanique (37, 47, 57) comprenant une troisième transmission variable en continu )comprenant : une première entrée (37.1 ; 47.1 ; 57.1) connectée mécaniquement au moteur à combustion interne (11), une deuxième entrée (37.2 ; 47.2 ; 57.2) connectée mécaniquement à une quatrième machine électrique (39 ; 49 ; 59) et une sortie connectée à la troisième unité fonctionnelle (3 ; 13 ; 15) ; la quatrième machine électrique (39 ; 49 ; 59) étant configurée pour fonctionner au moins en mode moteur et électriquement connectée au système de stockage (21) pour recevoir l'énergie électrique provenant du système de stockage ; et l'unité de commande (25) étant configurée pour commander la quatrième machine électrique (39 ; 49 ; 59) en fonction d'au moins un paramètre de fonctionnement de la troisième unité fonctionnelle (3 ; 13 ; 15), en particulier de la vitesse de la troisième unité fonctionnelle (3 ; 13 ; 15), de l'énergie absorbée par la troisième unité fonctionnelle (3 ; 13 ; 15) ou d'une combinaison des deux.

10. La moissonneuse-batteuse (1) selon la revendication 9, dans laquelle la troisième unité fonctionnelle comprend un canal d'alimentation (15) entre la tête de récolte (3) et le tambour de battage (13).

11. La moissonneuse-batteuse (1) selon l'une ou plusieurs des revendications précédentes, dans laquelle chaque machine électrique (19 ; 39 ; 49 ; 59) est apte à fonctionner en mode moteur ou en mode générateur ; et dans laquelle chaque machine électrique comprend :
une unité électrique ayant un rotor et un stator configurés pour fonctionner alternativement en mode moteur et en mode générateur ; ou
une première unité électrique ayant un rotor et un stator, apte à fonctionner principalement ou exclusivement en mode moteur et une deuxième unité électrique ayant un rotor et un stator apte à fonctionner principalement ou exclusivement en mode générateur.

12. La moissonneuse-batteuse (1) selon l'une ou plusieurs des revendications précédentes, dans laquelle au moins une et de préférence chaque transmission variable en continu comprend un engrenage à train épicycloïdal (37.6 ; 57.6).

13. La moissonneuse-batteuse (1) selon l'une ou plusieurs des revendications précédentes, comprenant une pluralité de roues d'entraînement (5) entraînées par au moins un moteur électrique (83) connecté au système de stockage (21).

14. La moissonneuse-batteuse (1) selon l'une ou plusieurs des revendications précédentes, comprenant un ventilateur de refroidissement du moteur à combustion interne (11), entraîné par un moteur électrique (85) connecté au système de stockage (21).

15. La moissonneuse-batteuse (1) selon l'une ou plusieurs des revendications précédentes, comprenant un dispositif de couplage (17) entre le moteur à combustion interne (11) et chacune desdites transmissions mécaniques (37, 47, 57).

16. La moissonneuse-batteuse (1) selon la revendication 15, dans laquelle la première machine électrique (19) est mécaniquement connectée au moteur à combustion interne (11) par l'intermédiaire dudit dispositif de couplage (17).

17. La moissonneuse-batteuse (1) selon l'une ou plusieurs des revendications précédentes, dans laquelle l'unité de commande (25) est configurée pour mesurer : la vitesse de rotation d'au moins la première unité fonctionnelle (3 ; 13 ; 15) ou l'énergie absorbée par la première unité fonctionnelle (3 ; 13 ; 15) et pour commander au moins la deuxième machine électrique (39 ; 49 ; 59) de façon à répondre à une variation de l'énergie absorbée par l'unité fonctionnelle (3 ; 13 ; 15) par rapport à une valeur prédéfinie, avec une variation de l'énergie délivrée par la deuxième machine électrique (39 ; 49 ; 59) à l'unité fonctionnelle (3 ; 13 ; 15).

18. Un procédé de pilotage d'une moissonneuse-batteuse (1), comprenant : un moteur à combustion interne (11) ; au moins une première machine électrique (19) connectée mécaniquement au moteur à combustion interne (11) et apte à convertir de l'énergie mécanique générée par le moteur à combustion interne (11) en énergie électrique ; un système de stockage (21) pour stocker l'énergie générée par la première machine électrique (19) ; une première transmission mécanique (37, 47, 57) qui connecte le moteur à combustion interne (11) à une première unité fonctionnelle (3 ; 13 ; 15) ; la première transmission mécanique (37, 47, 57) étant combinée à une deuxième machine électrique (39 ; 49 ; 59) configurée pour fonctionner au moins en mode moteur et électriquement connectée au système de stockage (21) pour recevoir l'énergie électrique provenant du système de stockage (21) ; et la première transmission mécanique (37, 47, 57) comprenant une transmission variable en continu comprenant : une première entrée (37.1 ; 47.1 ; 57.1) connectée mécaniquement au moteur à combustion interne (11), une deuxième entrée (37.2 ; 47.2 ; 57.2) connectée mécaniquement à la deuxième machine électrique (39 ; 49 ; 59) et une sortie (37.4 ; 47.4 ; 57.4A, 57,4B) connectée à la première unité fonctionnelle (3 ; 13 ; 15) ; une unité de commande (25) configurée pour commander la deuxième machine électrique (39 ; 49 ; 59) en fonction d'au moins un paramètre de fonctionnement de la première unité fonctionnelle (3 ; 13 ; 15), en particulier de la vitesse de la première unité fonctionnelle (3 ; 13 ; 15), de l'énergie absorbée par la première unité fonctionnelle ou une combinaison des deux ; ce procédé comprenant les étapes consistant à :
faire tourner la première machine électrique (19) avec le moteur à combustion interne (11) et produire de l'énergie électrique ;
alimenter le système de stockage (21) avec l'énergie électrique ;
par l'intermédiaire de l'unité de commande (25), détecter une variation du ou des paramètre(s) de fonctionnement de la première unité fonctionnelle (3 ; 13 ; 15) ; et
en réponse à la variation du paramètre de fonctionnement de la première unité fonctionnelle (3 ; 13 ; 15), faire varier l'énergie délivrée par la deuxième machine électrique (39 ; 49 ; 59) à la première unité fonctionnelle (3 ; 13 ; 15) par l'intermédiaire de la première transmission mécanique (37, 47, 57).

19. La procédé selon la revendication 18, dans lequel la première unité fonctionnelle comprend au moins l'un des éléments suivants : un tambour de battage (13), un tête de récolte (3), un canal d'alimentation (15) entre la tête de récolte (3) et le tambour de battage (13) ou une combinaison de ces éléments.
